# EUROPEAN PATENT APPLICATION

(11) **EP 1 967 760 A1**
(43) Date of publication of application: **10.09.2008**
(21) Application number: 05822391.8
(22) Date of filing: 28.12.2005
(51) Int. Cl.: F16G 13/04, F16G 13/06

(54) **SILENT CHAIN AND ITS MANUFACTURING METHOD**

(71) Applicant: Daido Kogyo Co., Ltd., Kaga-shi Ishikawa, 922-8686 (JP)
(72) Inventor: NAGAE, Masahiro, Kaga-shi, Ishikawa 9228686 (JP); MATSUI, Nobuyuki, Kaga-shi, Ishikawa 9228686 (JP)
(74) Representative: Whalley, Kevin
(86) International application number: PCT/JP2005/024148
(87) International publication number: WO 2007/077616

(57) **Abstract**

In an inner link rank 9 of a silent chain before pre-stress is applied, hole pitches of outer link plates 3₇ are shortened as compared to those of inner link plates 3₈ and 3₉ (P 17 < P18 < P19), so that the hole pitches of the respective link plates are plastically deformed and are substantially lined up. Although the hole pitches of the respective link plates are substantially lined up after when the pre-stress is applied, the outer link plates in a width direction in the inner link rank has high fatigue strength by residual stress, so that the wear resistant performance of the chain may be improved.

## Description

### TECHNOLOGICAL FIELD

The present invention relates to a silent chain and a manufacturing method of the same used as a power transmitting device in every kind of fields such as transportation machines, industrial machines and power machines, and more specifically to a silent chain that is suitably applicable to a timing chain of an engine and to which pre-stress is applied.

### BACKGROUND ART

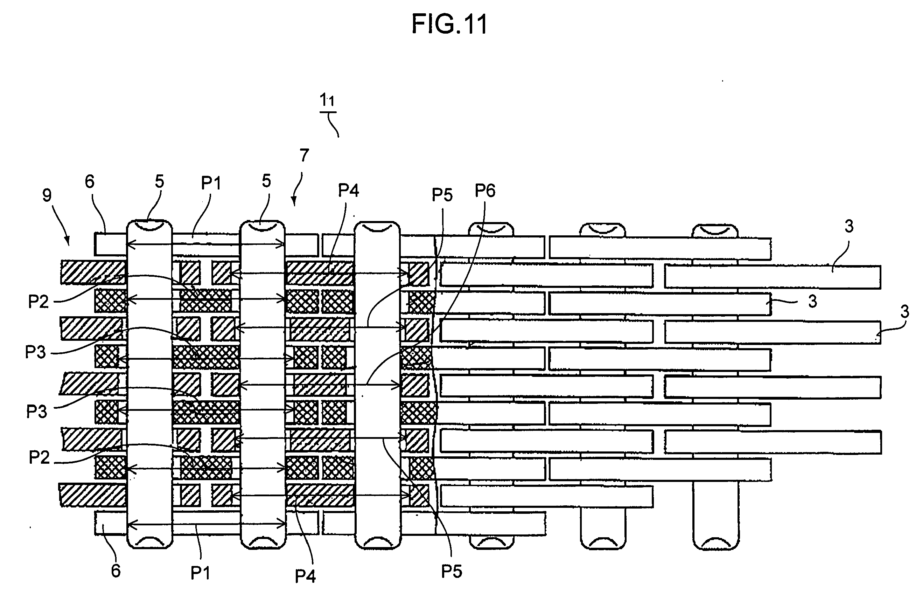

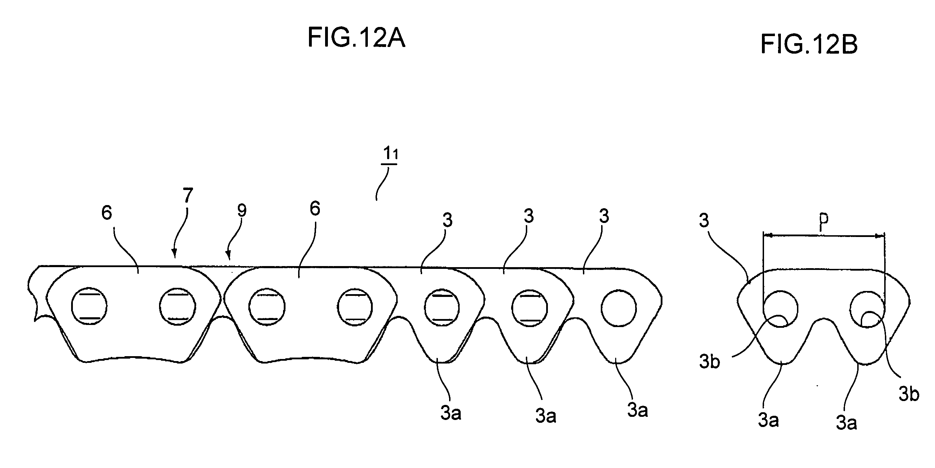

As shown in Figs. 11 and 12, a silent chain 1₁ has link plates 3 having a pair of teeth 3a and guide link plates (outer link plates) 6 having no teeth in general. The silent chain 1₁ is assembled endlessly by idly fitting each pin 5 through pin holes 3b of the link plates 3 and by fixing the pin 5 to holes of the guide link plates 6 disposed in outermost ranks by means of caulking or the like. Accordingly, guide link ranks (outer link ranks) 7 having the guide link plates 6 and non-guide link ranks (inner link ranks) 9 having no guide link plate 6 are linked alternately in a longitudinal direction of the chain. While a number of link plates 3 of the guide link rank 7 is less than a number of link plates 3 of the non-guide link rank 9 by one, the guide link rank 7 has more plates than the non-guide link rank 9 by one as a whole including the guide link plates 6.

After assembling the silent chain, pre-stress of tensile stress equivalent to 40 to 85 % of tensile strength of the chain is applied to the silent chain to plastically deform a pin hole 3b part of each link plate to improve a fatigue life of the silent chain (see Japanese Patent No. 2632656).

Conventionally, although all of the link plates 3 and the guide link plates 6 described above are assembled by the plates having a same hole pitch P, the hole pitch of the respective link plates and that of the guide link plates become slightly different from each other when the pre-stress is applied. It is noted that although the hole pitch P is assumed to be a distance between outer faces of the pair of pin holes 3b in the longitudinal direction of the link plate 3 as shown in FIG. 12B (outer hole pitch), the same applies to a value obtained by subtracting a radius of the pin 5 from the distance between the outer faces. The same also substantially applies to a distance between centers of the pair of pin holes (center hole pitch), so that any of those values may be used as long as they are used under the same condition as the hole pitch P.

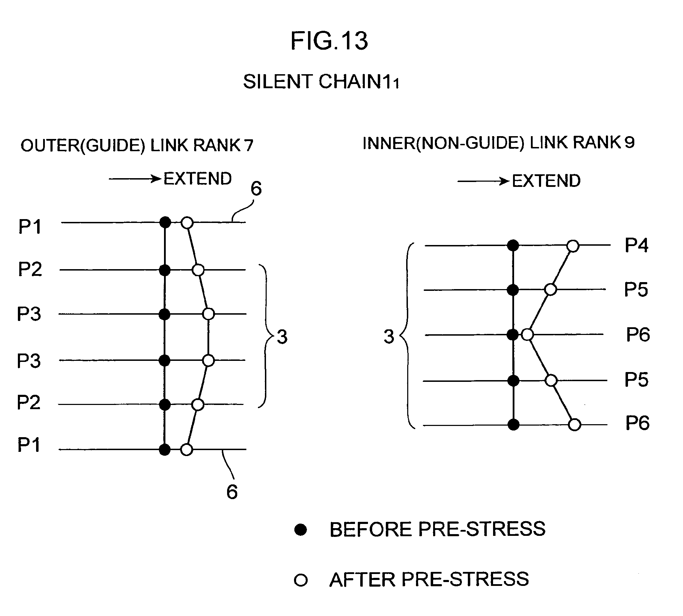

The guide link plate having no teeth has high rigidity as compared to the link plate and rigidity of the guide link rank whose both outer ends are the guide link plates and which has more link plates by one as a whole is greater than that of the inner link rank 9. Therefore, as for the hole pitch after when the pre-stress is applied, while the guide link plate 6 keeps substantially the same hole pitch P1 in the outer link rank 7, hole pitches P3 of the link plates 3 on the inner side (center side) become longer than hole pitches P2 of the link plates 3 on the outer side thereof as exaggeratingly shown in FIG. 11. In the non-guide link ranks 9 that are all composed of the link plates 3, the closer to the outside, the greater the extensional deformation of the hole pitch becomes and the deformation is smaller on the center side. FIG. 13 is a graph showing the plastic deformation of the respective plates of the guide (outer) link rank 7 and the non-guide (inner) link rank 9. That is, while black points represent the hole pitches in the assembled state (before stress is applied) which are all the same, the pitches after when the pre-stress is applied are P2 = P2 < P3 = P3 in the guide link rank 7 and P4 = P4 > P5 = P5 > P6 in the non-guide link rank 9 as indicated by white points.

There also exists a duplex driving silent chain in which a plurality of link plates in a center part in a chain width direction are arranged so that their teeth face in one direction, i.e., up or down, in the longitudinal direction as a front-face driving link plate and a plurality of link plates on the both outer sides are arranged so that their teeth face to the opposite side as a reverse-face driving link plate (see Japanese Patent No. 3182387). More specifically, this duplex driving silent chain is what is composed of two link plates on the both outsides in the chain width direction as the reverse-face driving link plates having teeth in the external side of the wrapped chain and of seven link plates on the inner side thereof as the front-face driving link plates having teeth in the internal side of the wrapped chain. The front-face driving link plates and reverse-face driving link plates transmit power by engaging with their special sprockets, respectively.

In the duplex driving silent chain, the outermost reverse-face driving link plates are fixed with the pins and compose the outer link plates similar to the guide link plates described above. It is noted that the reverse-face driving link plates (inner reverse-face driving link plates) adjacent to the both outsides of the front-face driving link plates function as the guide link plates for preventing the front-face driving link plates from falling out of a front-face driving sprocket. Accordingly, although the guide link rank 7 of the simplex driving silent chain 1₁ becomes the outer link rank having the outer link plates and the non-guide link rank 9 thereof becomes the inner link rank having no outer link plates, a rank having the outer link plates which are the outermost reverse-face driving link plates is the outer link rank and a rank having no outer link plate is the inner link rank also in the duplex driving silent chain.

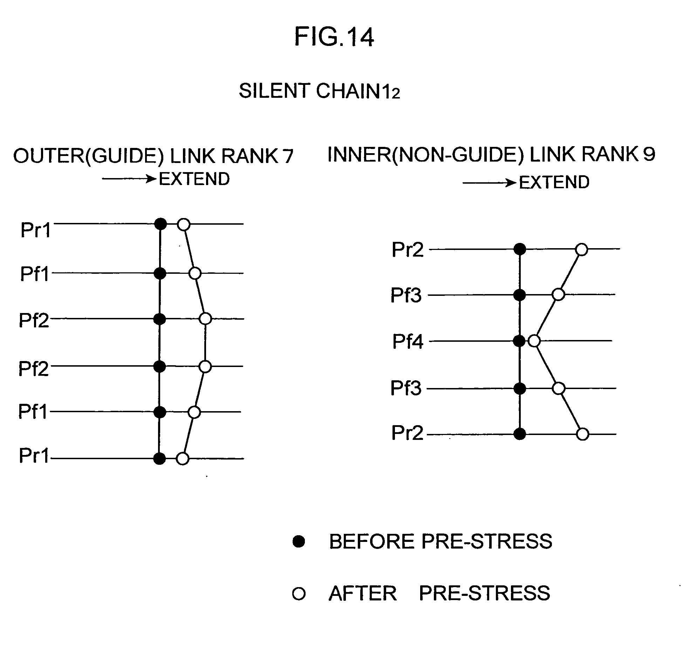

Then, the respective link plates of this duplex driving silent chain 1₂ have the equal hole pitch in an assembled state before the pre-stress is applied similarly to the simplex driving silent chain 1₁ described above. That is, as shown in FIG. 14, each one link plate on the both outsides are the reverse-face driving link plates (hole pitches Pr2 and Pr2) and those on the inner side are front-face driving link plates (hole pitches Pf3, Pf3 and Pf4) in the inner link ranks 9. Four link plates at the center side of the outer link ranks 7 are the front-face driving link plates (hole pitches Pf1, Pf1, Pf2 and Pf2), each one on the outsides are reverse-face driving link plates (hole pitches Pr1 and Pr1) and the outermost link plates (hole pitch Pr1 and Pr1) among them become the outer link plates. Then, all of the link plates in the outer link rank 7 and the inner link rank 9 have the same hole pitch before the pre-stress is applied (Pf1 = Pf1 = Pf2 = Pf2 = Pf3 = Pf3 = Pf4 = Pr1 = Pr1 = Pr2 = Pr2). It is noted that although the pin hole of the outer link plates (hole pitch Pr1, Pr1) is the same in all silent chains in this specification, a diameter of the pin hole is slightly smaller than that of the other (inner) link plates to which the pin is idly fitted because the pin is fitted into and is fixed with the pin hole of the outer link plates.

As indicated by white points in FIG. 14, the hole pitch of the duplex driving silent chain plastically deforms in an extension direction when the pre-stress is applied. That is, the closer to the both outsides, the greater the deformation of the hole pitch becomes (Pr 2 = Pr2 > Pf3 = Pf3 > Pf5) in the inner link rank 9 and the closer to the center, the greater the hole pitch becomes (pf2 = Pf2 > Pf1 = Pf1 > Pr1 = Pr1) in the outer link rank 7.

That is, the burden of stress on the link plates at the center part in the chain width direction (longitudinal direction of the pin) is different from that on the outer link plates in the conventional silent chains described above, i.e., in both of the simplex driving silent chain and the duplex driving silent chain, so that offset abrasion of the pin and the pin hole of the link plate occurs, causing the drop of the wear resistant extension performance of the chain.

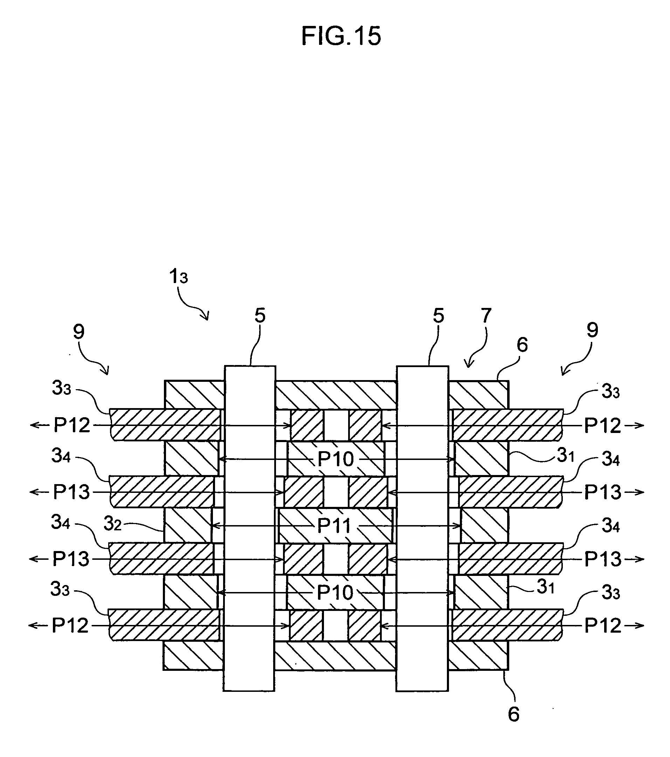

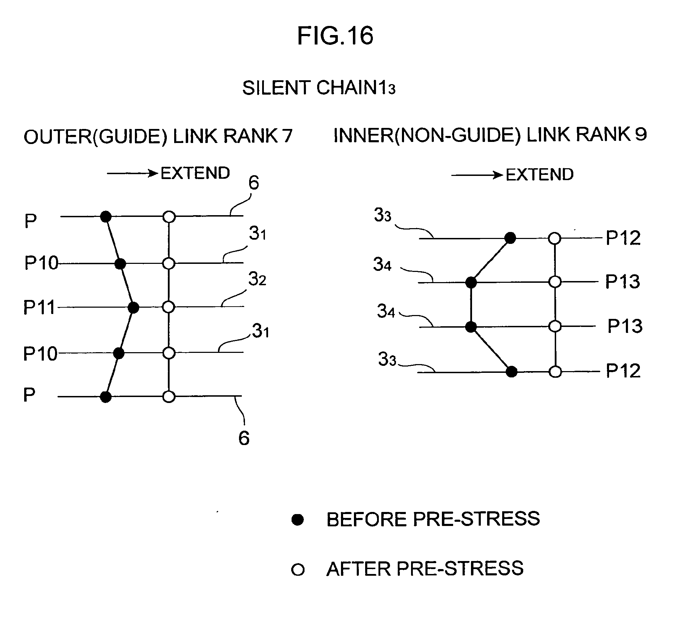

Then, there has been proposed a silent chain 1₃ having a plurality of types of link plates 3₁, 3₂, 3₃, 3₄ ... having different hole pitches as shown in FIG. 15 (see Japanese Patent No. 3271892, Claim 6 and Paragraph No. 0048). In a guide link rank (outer link rank) 7, the link plates 3₁ and 3₁ having a smaller hole pitch (P10) are disposed on outer sides and the link plate 3₂ having a large hole pitch is disposed at the center. In a non-guide link rank (inner link rank) 9, the link plates 3₃ and 3₃ having a large hole pitch (P13) are disposed on outer sides and the link plates 3₄ and 3₄ having a smaller hole pitch (P13) are disposed at the center. That is, as shown in FIG. 16, the hole pitches of the link plates 3₁ and 3₂ are set so that the closer to the center in the longitudinal direction of the pin, the larger the hole pitch becomes in the guide link rank 7 (P 11 > P10 = P10) and the hole pitches of the link plates 3₃ and 3₄ are set so that the closer to the edges in the longitudinal direction of the pin (outside in the chain width direction), the greater the hole pitch becomes in the inner link rank 9 (P12 = P12 > P13 = P13) so that the respective hole pitches of the respective link plates are lined up in the pin longitudinal direction after deforming the link plates by exerting a large tensile force such as the pre-stress to the silent chain 1₃.

### DISCLOSURE OF THE INVENTION

The silent chain 1₃ disclosed in Japanese Patent No. 3271892 is what each hole pitch of the link plate is adjusted corresponding to the deformation caused by the pre-stress in advance so that the hole pitches P of the guide link plates 6 and the link plates 3 are lined up after when large tensile stress such as the pre-stress is applied to the chain. That is, it is what the state caused by the pre-stress (see white points) shown in FIG. 13 is moved in parallel to replace with the state before the pre-stress is applied (see black points). Accordingly, as shown in FIG. 16, the deformation of the outer link plates 3₁ and 3₁ is large as compared to that of the center link plate 3₂ in the guide link rank (outer link rank) 7 and the deformation of the center link plates 3₄ and 3₄ is large as compared to that of the outer link plates 3₃ and 3₃ in the non-guide link rank (inner link rank) 9.

While the tensile stress applied to the chain largely affects the outer link plates both in the outer link rank and inner link rank in the silent chains in general, the deformation, i.e., the plastic deformation caused by the pre-stress, of the outer link plates 3₃ and 3₃ is small in the inner link rank 9 in particular in the silent chain 1₃ of Patent No. 3271892 described above. Although this plastic deformation generates surface compressive residual stress at the pin hole 3b part where it contacts and is pressed by the pin 5 and thus improves the fatigue strength of the chain, the residual stress caused by the plastic deformation of the outer link plates 3₃ in the inner link rank to which large tensile stress is exerted in actual use is small in the silent chain 1₃ described above. Accordingly, it is considered to cause a drop of the fatigue strength of the whole silent chain.

Accordingly, it is an object of the invention to provide a silent chain, and a manufacturing method thereof, whose wear resistant performance is improved as a whole by arranging so that link plates on outermost sides in the chain width direction in an inner link rank in particular have high strength based on residual stress while substantially equalizing hole pitches of the respective link plates after when pre-stress is applied.

The invention is characterized in that in a silent chain (1₄, 1₅, 1₆ or 1₇) constructed by linking a large number of link plates (6, 3 ...,23 ..., 13 ...) having a pair of teeth (3a) and pin holes (3b) by idly fitting pins (5) into the pin holes, by disposing outer link plates (6, 23₁) on outermost sides of the link plates in a link rank in which a number of link plates in a chain width direction is lessened by one while being fixed with the pin and by applying pre-stress of tensile stress greater than yield stress of the link plate in a state in which an inner link rank (9) having no outer link plate and an outer link rank (7) having the outer link plates are assembled alternately in a longitudinal direction of the pin, a hole pitch between the pair of pin holes of the outermost link plates (3₇) (23₂) in the chain width direction in the inner link rank (9) is arranged to be shorter than that of center link plates (3₈, 3₉)(13₂) in a state in which the chain is assembled and no pre-stress is applied and the hole pitches of the link plates in the inner link rank are equalized after when the pre-stress is applied as compared to those before the pre-stress is applied.

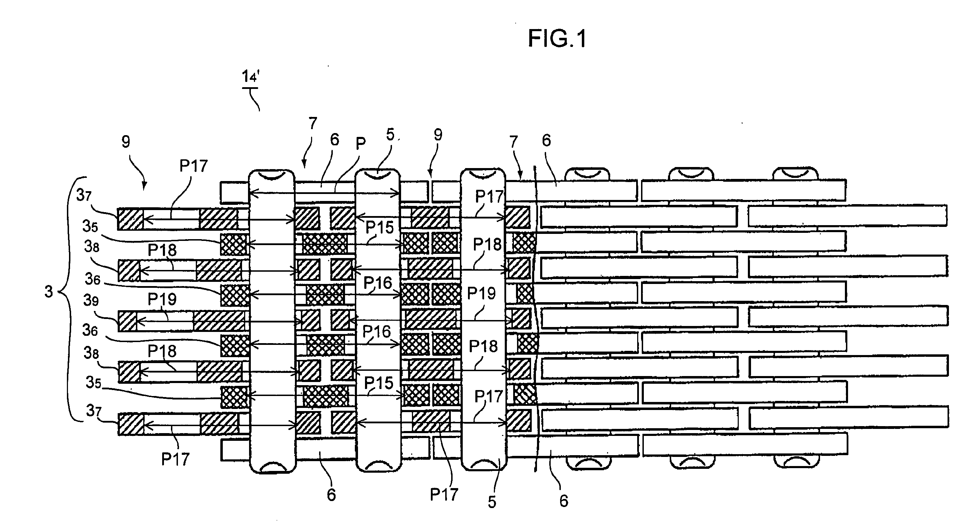

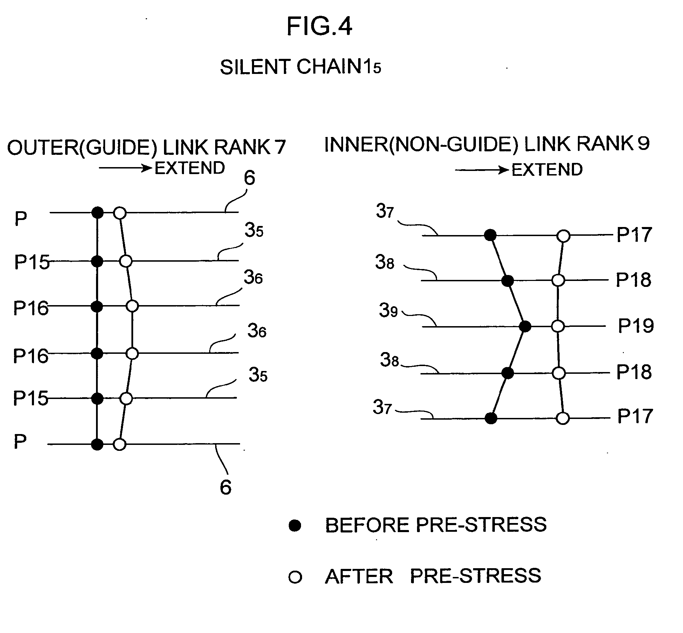

In the outer link (7), the link plates (3₆) located at the center in the chain width direction may be arranged so that the hole pitch thereof is shorter than those of the link plates (3₅) located on the outsides thereof (P16 < P15) in the state in which the chain is assembled and no pre-stress is applied as shown in Figs. 1 through 3 for example.
Still more, in the state in which the chain is assembled and no pre-stress is applied, the large number of link plates (3₅, 3₆, 13₁) may be those having substantially the equal hole pitch (P15 = P16, P20) as shown in Figs. 4 through 10 for example.

The invention is applicable to a so-called simplex silent chain (1₄ or 1₅) in which the outer link plate is a guide link plate (6) that prevents the chain from falling out of a sprocket teeth and is fixed with the pin (5) so as not be rotatable, and which has teeth only in one direction above or below a pitch line as shown in Figs. 1 through 4 for example.

The invention is also applicable to a duplex driving silent chain (1₆ or 1₇) in which the link plates include front-face driving link plates (13 ...) arranged so that teeth thereof face up or down and reverse-face driving link plates (23 ...) arranged so that teeth thereof face to the opposite direction and which has teeth in both directions above and below a pitch line.

Specifically, it is preferable to construct the duplex driving silent chain (1₆ or 1₇) so that a plurality of ranks of the reverse-face driving link plates (23₁, 23₂) are disposed on the both sides of a plurality of ranks of the front-face driving link plates (13 ...),
the outer link plates (23₁) have a pair of teeth facing to the same direction with the reverse-face driving link plates and are fixed with the pin (5) so as not to be rotatable, and
the reverse-face driving link plates (23₂) adjacent to the front-face driving link plates are constructed so that height of a back (h) on a vertically opposite side from their teeth is high as compared to that of the other reverse-face driving link plates (23₁) so as to function as guide link plates for preventing the chain from falling out of sprocket teeth.

The invention is characterized in that in a manufacturing method of a silent chain wherein a large number of link plates (6, 3 ..., 23 ..., 13 ...) having a pair of teeth and pin holes are linked by idly fitting pins into the pin holes and outer link plates (6, 23₁) are disposed on outermost sides of the link plates in a link rank in which a number of the link plates in the chain width direction is lessened by one while being fixed with the pin and inner link ranks (9) having no outer link plate and outer link ranks (7) having the outer link plates are assembled alternately in a longitudinal direction of the chain,
preparing a plurality of types of the large number of link plates whose hole pitch between the pair of pin holes are different (3₇, 3₈, 3₉) (13₁, 13₂, 23₂) and assembling the link plates of the inner link rank (9) so that the hole pitch of the outermost link plates (3₇, 23₂) in the chain width direction is shorter than that of the center link plates (3₈, 3₉), and
applying pre-stress of tensile stress greater than yield stress of the link plate to the chain after assembling the chain to plastically deform the hole pitch of the link plates in the inner link rank so that the hole pitches are equalized as compared to those before the pre-stress is applied.

According to the invention, the outermost link plates before the pre-stress is applied is arranged so that the hole pitch thereof is shortened as compared to those of the inner link plates and so that the hole pitches of the respective link plates are substantially lined up in the inner link rank after when the pre-stress is applied, so that burden of stress of the respective link plates is leveled and the plastic deformation caused by the pre-stress of the outermost link plates in the inner link rank is increased. Then, the fatigue strength of the pin hole part is improved by the residual stress, the fatigue strength of the silent chain may be improved and the wear resistant performance may be improved.

### BRIEF DESCRIPTION OF THE DRAWINGS

FIG. 1 is a partially section plan view showing a state before pre-stress is applied according to one mode of the invention applied to a simplex driving silent chain.
FIG. 2 is a partially section plan view of the silent chain to which the pre-stress has been applied.
FIG. 3 is a graph showing hole pitches of respective link plates in the mode described above.
FIG. 4 is a graph showing hole pitches of respective link plates in another mode in which each link plate in an outer link rank having substantially the equal hole pitch before pre-stress is applied is used.
FIG. 5 is a partially section plan view showing a state before pre-stress is applied in a mode of the invention applied to a duplex driving silent chain.
FIG. 6 is a front view showing the duplex driving silent chain.
FIG. 7 is a front view showing a chain power transmitting apparatus using the duplex driving silent chain.
FIG. 8 is a graph showing hole pitches of respective link plates of the duplex driving silent chain.
FIG. 9 is a plan view of the duplex driving silent chain in a mode in which the chain is partially modified.
FIG. 10 is a graph showing hole pitches of the respective link plates of the silent chain in FIG. 9.
FIG. 11 is a partially section plan view showing a conventional simplex driving silent chain before pre-stress is applied.
FIG. 12a is a front view of the simplex driving silent chain in FIG. 11 and FIG. 12b is a front view showing a link plate thereof.
FIG. 13 is a graph showing hole pitches of respective link plate of the simplex driving silent chain.
FIG. 14 is a graph showing hole pitches of respective link plates of a conventional duplex driving silent chain.
FIG. 15 is a section view showing a conventional silent chain using link plates whose hole pitches are different before pre-stress is applied.
FIG. 16 is a graph showing hole pitches of the respective link plates of the silent chain in FIG. 15.

### BEST MODE FOR CARRYING OUT THE INVENTION

Modes for carrying out the invention will be explained below. Similarly to the conventional silent chains shown in Figs. 11 and 12, a silent chain is composed of link plates 3 having a pair of teeth 3a and pin holes 3b and of guide link plates 6 having no teeth. The link plates 3 are linked from each other by pins 5 idly and rotatably fitted into the pin hole 3b of the respective link plates 3. The pin 5 is pressed into a hole of the guide link plate 6 and is caulked and fixed with the guide link plate 6 so as not to be rotatable. This silent chain is a so-called simplex driving silent chain in which the link plates 3 are arranged so that their teeth 3a are positioned only one side with respect to a pitch line thereof and an outer link rank (guide link rank) 7 having the guide link plates 6 and an inner link rank (non-guide link rank) 9 composed only of the link plates 3 in a longitudinal direction of the pin are disposed alternately in a longitudinal direction of the silent chain.

FIG. 1 is a plan view showing a state in which the silent chain is assembled and no pre-stress is applied. This silent chain 1₄ has a plurality of types of link plates 3₅, 3₆ ... having different hole pitches Pi. In an outer link rank 7, link plates located on the outsides in the chain width direction have a longer hole pitch as compared to that of the link plates located on the center and in an inner link rank 9, the link plates located on the center in the chain width direction have a longer hole pitch as compared to that of the link plates located on the outsides. More specifically, in the outer link rank 7, the outer link plates 3₅ and 3₅ adjacent to guide link plates 6 have a longer hole pitch P15 and the two center link plates 3₆ and 3₆ have a shorter hole pitch P16 which is short as compared to that of the outer link plates (P15 > P16). In the inner link rank 9, the link plates 3₇ and 3₇ on the both ends in the chain width direction have a shortest hole pitch P17, the two link plates 3₈ and 3₈ located on the inside thereof have a hole pitch P18 which is longer than that of the link plates 3₇ on the both ends described above and one center link plate 3₉ has a hole pitch P19 which is still longer than that of the link plates 3₈ described above (P17 < P18 < P19).

Then, after assembling the chain by pressing the guide link plates 6 into the both ends of the pin 5 and by fixing them by means of caulking or the like, pre-stress of tensile stress (equivalent to 40 to 85 % of tensile strength of the chain) which is, at least, greater than yield stress of the link plate 3 is applied to the chain. Thereby, concentrated stress acts on each link plate 3, or on the pin hole 3b part in particular, and the pin hole 3b is plastically deformed into a shape of ellipse. Then, surface compression residual stress is generated on the outer face of the pin hole 3b in the plate longitudinal direction and the fatigue strength may be improved.

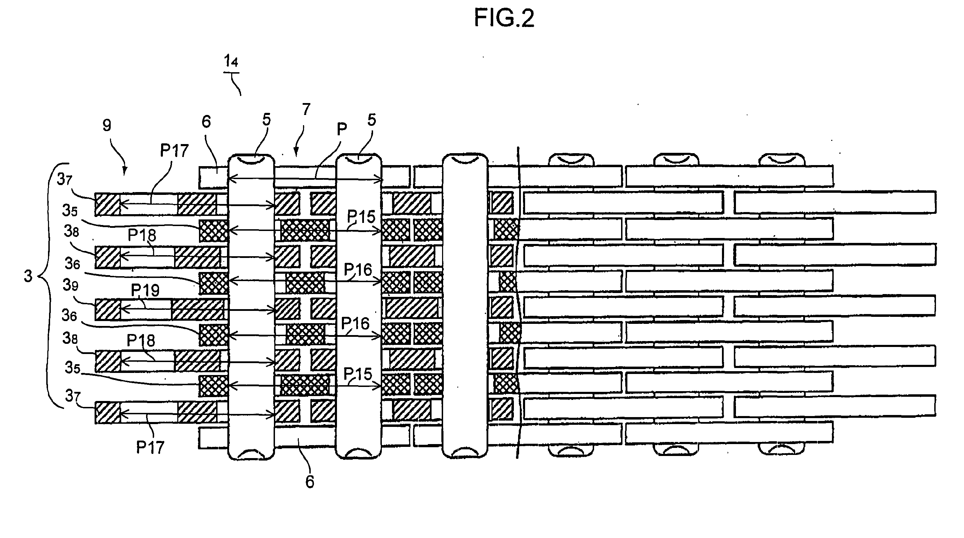

FIG. 2 is a plan view showing the silent chain 1₄ after when the pre-stress is applied. The hole pitch Pi of each link plate 3 is changed by the plastic deformation. In the outer link rank 7, the outer link plates 3₅ and 3₅ and the center link plates 3₆ and 3₆ are deformed so that they have substantially the same hole pitch (P15 ≒ P16) or so that the hole pitch P16 of the center becomes slightly larger (substantially in the same range) than the outer hole pitch P15. In the inner link rank 9, each of the link plates 3₇, 3₈ and 3₉ is plastically deformed so that they have substantially the same hole pitch (P17 ≒ P18 ≒ P19) or so that the hole pitch becomes slightly longer (substantially in the same range) from the center link plate 3₉ to the outer link plate 3₇. It is noted that Figs. 1 and 2 are shown by expanding the changes of the hole pitches and the difference of the hole pitches of the respective link plates 3 before the pre-stress is applied is actually around 0.03 mm in maximum and the plastic deformation caused by the pre-stress is around 0.04 mm in maximum in the silent chain whose hole pitch is 8.8 to 8.9 mm.

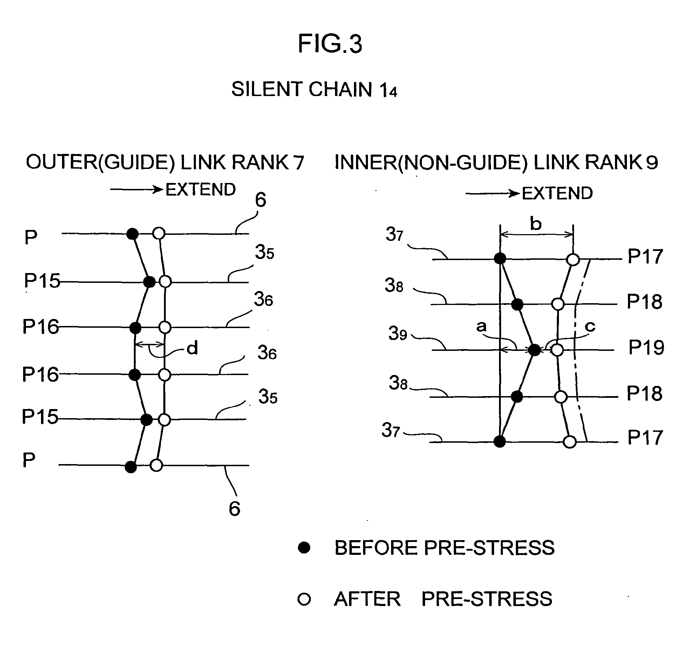

FIG. 3 is a graph showing the relationship of the hole pitches of the respective link plates and the plastic deformation caused by the pre-stress. In this silent chain 1₄, the plastic deformation of the center link plates 3₆ and 3₆ is large as compared to that of the outer link plates 3₅ and 3₅ in the outer link rank 7 and the plastic deformation of the link plates 3₇ and 3₇ located on the outsides in the chain width direction is large as compared to that of the link plates 3₈ and 3₈ located inside in the inner link rank 9. That is, in the inner link rank 9, the deformation of the outermost link plates 3₇ and 3₇ is largest, the surface compressive residual stress around the pin hole caused by the plastic deformation described above is also largest and the residual stress becomes small as the link plate is closer to the center.

While the largest tensile stress is applied to the outermost link plates 3₇ adjacent to the guide link plates 6 having the great rigidity in a state when the silent chain 1₄ is used, the link plates 3₇ have the structure having the highest fatigue strength based on the high residual stress as described above. Meanwhile, in the outer link rank 7, large tensile stress is applied to the center link plates 3₆ and 3₆ rather than the outer link plates 3₅ and 3₅ because the outer link plates are carried by the guide link plates 6 having the high rigidity and the pin bends due to elastic deformation caused by the tensile force of the chain, the center link plates 3₆ has the high residual stress generated by the large plastic deformation and has a structure having the high fatigue strength because the pre-stress has been applied by shortening the hole pitches P16 and P16 of the center link plates 3₆ and 3₆ as compared to the hole pitches P15 and P15 of the outer link plates 3₅ and 3₅ in advance as described above. In combination them, the fatigue strength of the link plates 3₇ and 3₆, which has been a weak point in the past, may be enhanced and the life of the whole silent chain 1₄ may be prolonged.

Still more, as shown in FIG. 3, the hole pitches Pi of the respective link plates are substantially lined up after applying the pre-stress by changing the plastic deformation of the respective link plates in the outer link rank 7 and the inner link rank 9 in the silent chain 1₄. Further, when a tensile stress is applied in the state when the chain is used, the inner link rank 9 deform minutely along the slight bend of the pin 5, respectively, so that the offset friction of the pin and the pin hole may be reduced and the wear resistant extension performance of the chain may be improved.

It is noted that in FIG. 3, a difference between the hole pitches of the outermost link plate 3₇ and the center link plate 3₉ (P19 - P17) is 0.4 to 0.6 % of the hole pitch (P17) and differences between the respective hole pitches (P18 - P17, P19 - P17) are about 0.2 to 0.3 %, i.e., a half of the difference described above, in the inner link rank 9. Still more, in the inner link rank 9, the plastic deformation b of the outermost link plate 3₇, i.e., a maximum deformation after when the pre-stress is applied, is 0.6 to 0.8 % or is preferably about 0.7 % of the hole pitch (P17) and a plastic deformation c of the center link plate 3₉, i.e., a least deformation, is 0.08 to 0.3 %, or preferably about 0.2 %, of the hole pitch (P19). Still more, a plastic deformation d of the outer link rank 7 after when the pre-stress is applied is 0.08 to 0.4 %, or preferably about 0.2 %, of the hole pitch (P16).

FIG. 4 shows another embodiment in which the silent chain described above is partially modified. In this silent chain 1₅, while the same link plates 3₇, 3₈ and 3₉ with those in the previous embodiment shown in FIG. 1 are used in the inner link rank 9, link plates 3₅ (= 3₆) having an equal hole pitch (P15 = P16) are used in the outer link rank 7. When the pre-stress is applied, although the link plates in the inner link rank 9 deform substantially in the same manner with those shown in FIG. 3, the link plates in the outer link rank 7 deform substantially in the same manner with the conventional ones shown in FIG. 13.

Accordingly, while the outer link plates 3₇ cause the large plastic deformation as compared to the center link plates 3₈ and 3₉ and have the high anti-fatigue performance by the residual stress in the inner link rank 9 similarly to the previous embodiment, the inner link plates 3₆ cause the larger plastic deformation as compared to the outer link plates 3₅, though it is slight, and have the high anti-fatigue performance by the residual stress in the outer link rank 7.

In this silent chain 1₅, although the improvement of the fatigue strength and wear resistant performance may be possibly inferior to the previous embodiment in the outer link rank 7, it excels in that a number of parts may be reduced and that assembling performance is good because the same link plates may be used in the outer link rank 7.

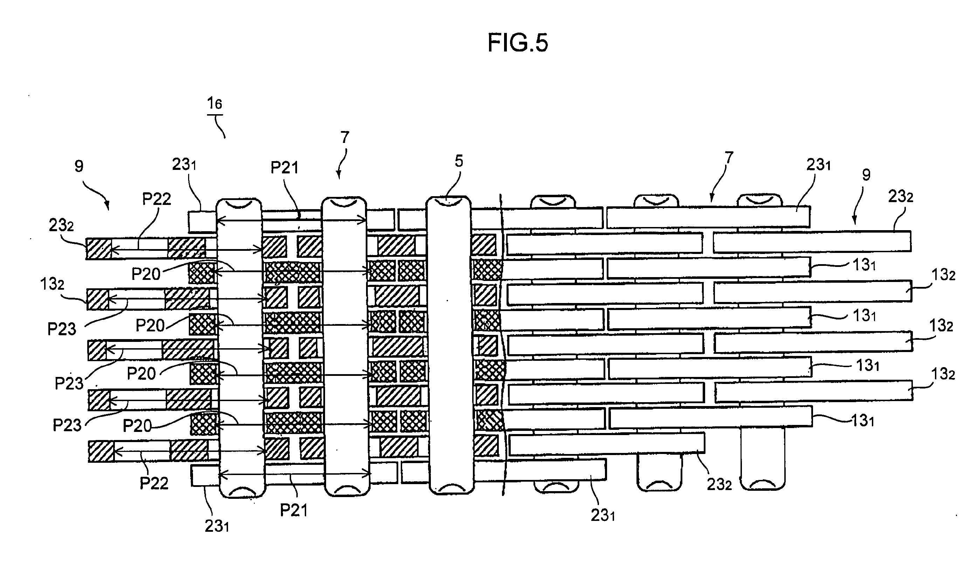

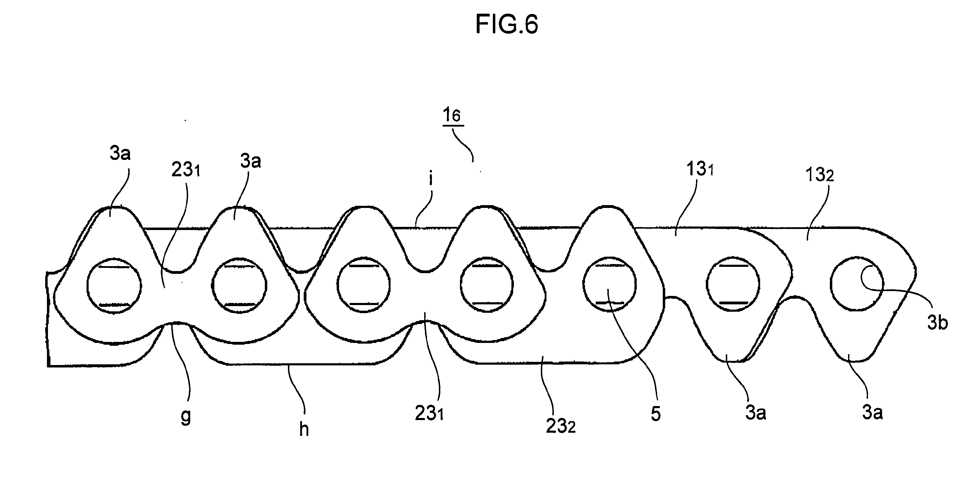

Next, a still other embodiment of the invention applied to a duplex driving silent chain will be explained. FIG. 5 is a partially sectional plan view of the silent chain before the pre-stress is applied and FIG. 6 is a front view thereof. This duplex driving silent chain 1₆ is composed of two each link plates located on the outsides as reverse-face (back) driving link plates 23₁ and 23₂ whose teeth 3a face to the external side and seven link plates located inside as front-face driving link plates 13 ... whose teeth 3a of face to the internal side and is constructed endlessly by fixing pins 5 to the outermost link plates 23₁ and 23₁ by means of caulking or the like.

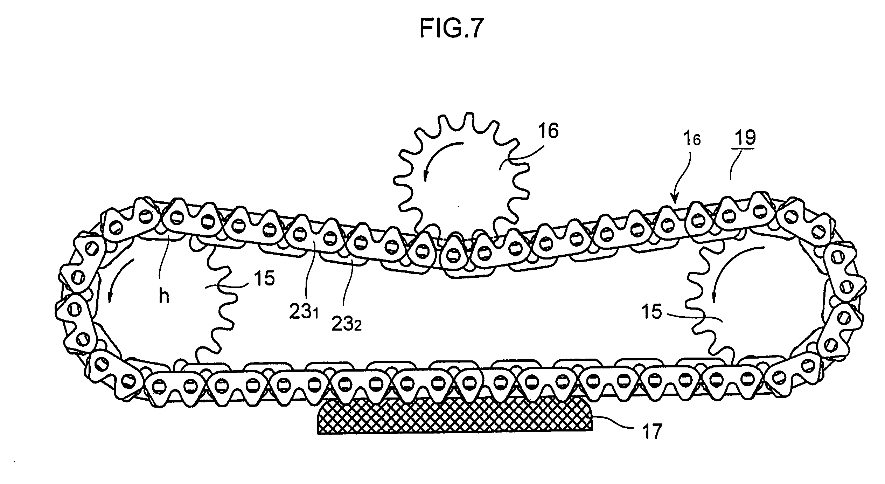

Accordingly, the outermost reverse-face driving link plates 23₁ and 23₁ form the outer link plates, link plates (23₁, 13₁, 13₁, 13₁, 13₁, 23₁) linked in the same rank with the outer link plates in the width direction form the outer link rank 7 and the link plates (23₂, 13₂, 13₂, 13₂, 23₂) linked in the same rank with the inner reverse-face driving link plates 23₂ in the width direction form the inner link rank 9. While all of the front-face driving link plates 13 have the same shape when seen from the side, the back side of the reverse-face driving link plates 23₁ and 23₂ differ from each other, though the shape of the teeth 3a is the same. That is, while the outermost outer-face driving link plates 23₁ has a lightened shape in which its back g is low and the center thereof is concaved, the inner reverse-face driving link plates 23₂ has a high back h that performs the function of the guide link plate that contacts with the side face of inner-face (front-face) driving sprockets 15 (see FIG. 7) to prevent the chain from falling. The pair of teeth 3a of the reverse-face driving link plates 23₁ and 23₂ protrude out of the back i of the front-face driving link plates 13 and function as a guide that abuts against the side-face of a chain-guide (tensioner) 17.

FIG. 7 is a diagrammatic view showing a chain power transmitting device 19 to which the duplex driving silent chain 1₆ described above is applied. This silent chain 1₆ is wrapped around the pair of front-face driving sprockets 15. The front-face driving sprocket 15 has sprocket teeth that engage with teeth of the front-face driving link plates 13 disposed at the center of the chain while pinching the high back h of the inner reverse-face driving link plates 23₂. The device 19 also has a reverse-face driving sprocket 16 and the chain guide (tensioner) 17 disposed on the back side of the silent chain 1₆.

The reverse-face driving sprocket 16 has a pair of sprocket teeth in an axial direction while leaving a predetermined distance therebetween and those sprocket teeth engage with the reverse-face driving link plates 23 disposed on the both outsides of the chain. The chain guide 17 abuts against the back i of the front-face driving link plates 13 while slidably contacting its side face to side faces of the teeth 3a of the inner reverse-face driving link plates 23₂ of the chain to give predetermined tension to the chain 1₅.

In the duplex driving silent chain 1₅ before the pre-stress is applied, the respective link plates 23₁, 23₁, 13₁ and 13₁ have substantially the same hole pitch P20 (≒ P21) in the outer link rank 7 as shown in FIG. 5. It is noted that the hole pitch P21 of the outermost outer link plate 23₁ is substantially the same, it is preset to be slightly smaller than that in order to fix the pin 5 by means of caulking. In the inner link rank 9, a hole pitch P22 of the outer link plates 23₂ and 23₂ is set to be shorter than a hole pitch P23 of the other link plates 13₂, 13₂, 13₂ by a predetermined value (P22 < P23). The hole pitch P23 of the inner link plates 13₂ is all substantially the same and the front-face driving link plates 13₁ and 13₂ of the inner link rank 9 and the outer link rank 7 have substantially the same hole pitch (P20 = P23).

Accordingly, this duplex driving silent chain 1₆ uses the same front-face driving link plates 13₁ and 13₂, regardless of the inner link rank 9 or the outer link rank 7, and is composed of three types of link plates together with the two types of reverse-face driving link plates 23₁ and 23₂.

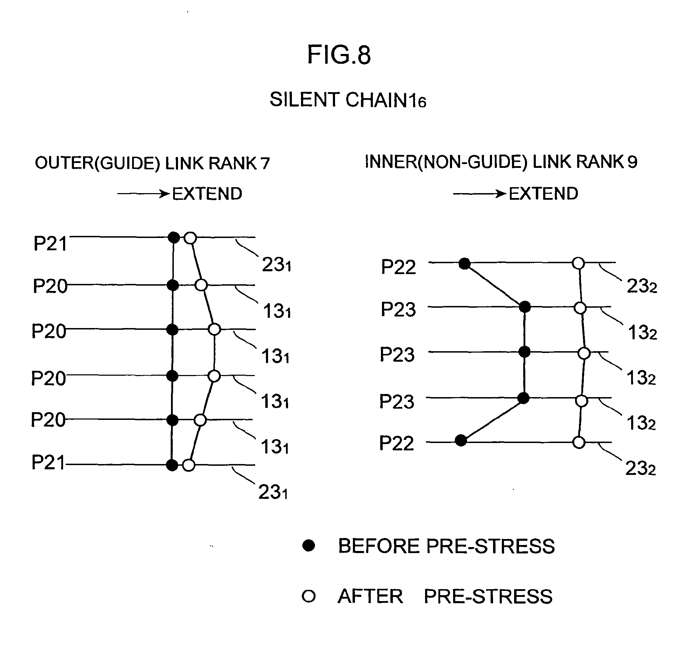

FIG. 8 is a graph showing a state in which pre-stress of tensile force of about 65 % of breakdown stress is applied to the duplex driving silent chain 1₆. The same result with the simplex driving silent chains 1₄ and 1₅ described above is obtained also in this duplex driving silent chain 1₆. In the outer link rank 7, the hole pitch of the link plates extends bit by bit after when the pre-stress is applied from the outermost link plates to the center link plates. In the inner link rank 9, while the outer link plates (inner reverse-face driving link plate) 23₂ whose hole pitch P22 is short extends largely and the hole pitch of the outer link plate 23₂ is substantially lined up with the other link plate even though it is slightly short as compared to that of the other link plates 13₂.

Thereby, even though the inner reverse-face driving link plates 23₂ have the high back h to perform the function of a guide link plate and have the structure whose tensile strength is high, the link plates 23₂ adjacent to the outer link plates 23₁ have the pin hole part plastically deformed in connection with the outer link plates 23₁ to which the pin 5 is caulked similarly to the simplex driving silent chain. Then, the fatigue strength may be improved by the residual stress and the hole pitches may be lined up.

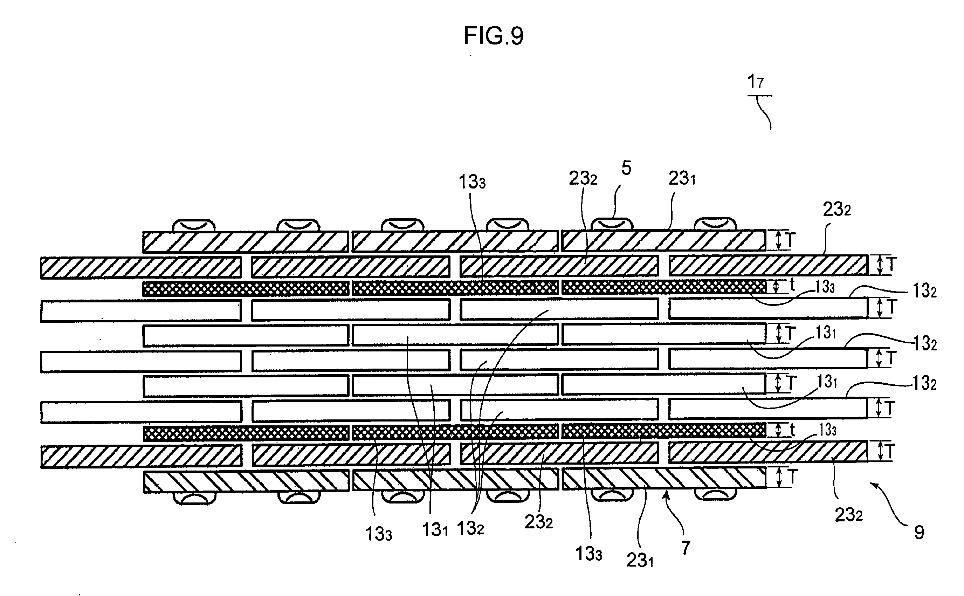

Next, a partially modified duplex driving silent chain 1₇ will be explained along FIG. 9. While the silent chains described above have used the link plates having the same thickness , a thickness of part of link plates is different in the present embodiment. Similarly to the previous silent chain 1₆, the duplex driving silent chain 1₇ has two each outer reverse-face driving link plates 23₁ and 23₂ and inner front-face driving link plates 13₁, 13₂ and 13₃. While the inner link plates 23₂ in the reverse-face driving link plates 23₁ and 23₂ have the high back to perform the function of the guide link plate similarly to the previous embodiment, the outermost front-face driving link plates (the plates adjacent to the reverse-face driving link plates 23₂) 13₃ have a thinner thickness as compared to that of the other link plates 13₁ and 13₂. That is, except of the thickness t of the outer front-face driving link plates 13₃ described above, all of the other link plates 13₁, 13₂, 23₁ and 23₂ have the same thickness T. That is, the thickness of the outer front-face driving link plates 13₃ have the thickness t thinner than the thickness T (T > t). For example, in a chain having a pitch of 6.35 mm, while the thickness T of the link plates 13₁, 13₂, 23₁ and 23₂ is 1.20 mm, the thickness t of the outer link plates 13₃ is 0.90 mm.

As shown in FIG. 9, the outer link rank 7 having the outer link plates 13₃ has one extra link plate as compared to the adjacent inner link rank 9. More specifically, while a number of the front-face driving link plates 13₁ and 13₃ of the outer link rank 7 is four, a number of the front-face driving link plates 13₂ in the inner link rank 9 is three. Then, while a total thickness of the outer link rank 7 including the reverse-face driving link plates 23₁ (T x 4 + t x 2) is 6.6 mm, a total thickness of the inner link rank 9 (T x 5) is 6 mm. If the link plates are supposed to be made from the same material, are treated by heat in the same manner (hardness) and have the same tensile stress, the total thickness of the outer link rank 7 is slightly larger than that of the inner link rank 9. However, because the height of the inner link plates 23₂ of the front-face driving link in the inner link rank 9 to the back h is actually high and the tensile strength is large, the balance of tensile strength of the outer link rank 7 and the inner link rank 9 is substantially equal.

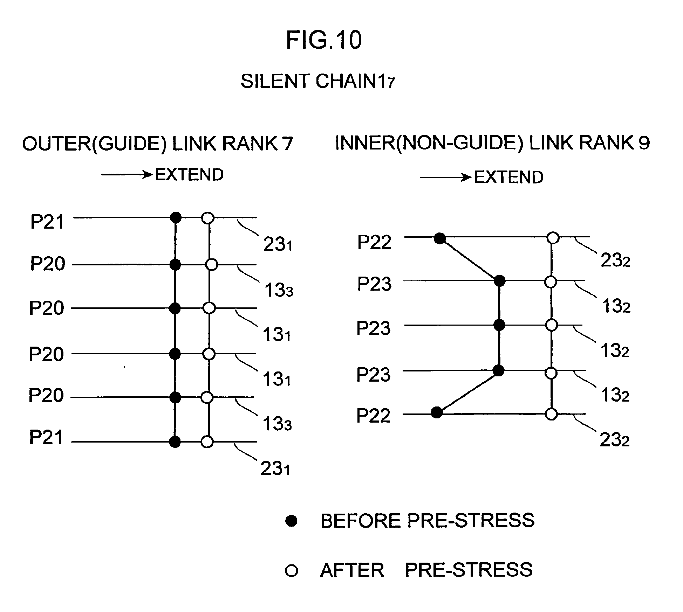

The hole pitch of the respective link plates before the pre-stress is set in the same manner with the hole pitch of the previous silent chain 1₆, i.e., so that only the hole pitches of the outer link plates 23₂ of the inner link rank 9 are set to be shorter than those of the other link plates (P21 ≒ P20 = P23 > P22) also in this silent chain 1₇. Then, when the pre-stress is applied to this silent chain 1₇, the relationship between the pre-stress and the hole pitches of the link plates is presumed to turn out as shown in FIG. 10. That is, because the second link plates 13₃ resistant together with the outermost link plates 23₁ are thin in the outer link rank 7, they are readily deformed and are substantially lined up. The respective link plates 23₂ and 13₂ are also presumed to substantially line up in the inner link rank 9.

Although the embodiments described above have been explained with respect to the simplex driving silent chain and to the duplex driving silent chain separately, the technology applied to the respective embodiments is applicable to the both of the simplex driving silent chain and duplex driving silent chain. For example, the arrangement in which the hole pitches of the respective link plates in the inner link rank gradually extends from the outermost link plates to the center link plates or the arrangement in which the hole pitch of the center link plates in the outer link rank is shortened as compared to the outer link plates applied to the simplex driving silent chain may be applied also to the duplex driving silent chain. Still more, the arrangement in which the link plates having the same hole pitch are used except of the outermost link plates in the inner link rank or the arrangement in which the thickness of the link plates is differentiated applied to the duplex driving silent chain may be applied also to the simplex driving silent chain.

Still more, equalizing the hole pitches of the respective link plates after applying pre-stress implicates not only that the hole pitches are substantially equal but also that they are equalized as compared to the hole pitches of the respective link plates before the pre-stress is applied, i.e., a maximum difference of the hole pitches of the respective link plates after when the pre-stress is applied smaller than a maximum difference of the hole pitches of the respective link plates before the pre-stress is applied.

### INDUSTRIAL APPLICABILITY

Accordingly, the inventive silent chain may be used as a power transmitting device in every kind of fields such as transportation machines, industrial machines and power machines and is suitably applicable to a timing chain of automobiles.

## Claims

1. A silent chain, comprising:
a large number of link plates having a pair of teeth and pin holes linked by idly fitting pins into said pin holes; and
outer link plates disposed on outermost sides of said link plates in a link rank in which a number of said link plates in a chain width direction is lessened by one while being fixed with said pin;
whereinpre-stress of tensile stress greater than yield stress of said link plate being applied in a state in which inner link ranks having no outer link plate and outer link ranks having said outer link plates are assembled alternately in a longitudinal direction of said chain;
the silent chain being **characterized in that** a hole pitch between said pair of pin holes of said outermost link plates in the chain width direction in said inner link rank is arranged to be shorter than that of center link plates in a state in which said chain is assembled and no pre-stress is applied; and
the hole pitches of said link plates in said inner link rank are leveled so that the hole pitches are equalized after when said pre-stress is applied as compared to those before said pre-stress is applied.

2. The silent chain as set forth in Claim 1, wherein said link plates located at the center in the chain width direction in said outer link rank is arranged so that said hole pitch is shorter than those of said link plates located on the outsides in the state in which said chain is assembled and no pre-stress is applied.

3. The silent chain as set forth in Claim 1, wherein said large number of link plates in said outer link rank are link plates having substantially the equal hole pitch in the state in which said chain is assembled and no pre-stress is applied.

4. The silent chain as set forth in anyone of Claims 1 through 3, wherein said outer link plate is a guide link plate that prevents said chain from falling out of a sprocket teeth and is fixed with said pin so as not be rotatable; and
said silent chain has teeth only in one direction above or below a pitch line.

5. The silent chain as set forth in anyone of Claims 1 through 3, wherein said link plates include front-face driving link plate arranged so that teeth thereof face up or down and reverse-face driving link plate arranged so that teeth thereof face to the opposite direction; and
said silent chain is a duplex driving silent chain having teeth in the both planes above and below a pitch line.

6. The silent chain as set forth in Claim 5, wherein a plurality of ranks of said reverse-face driving link plates are disposed on the both sides of a plurality of ranks of said front-face driving link plates;
said outer link plates have a pair of teeth facing to the same direction with said reverse-face driving link plates and are fixed with said pin so as not to be rotatable; and
said reverse-face driving link plates adjacent to said front-face driving link plates are constructed so that height of a back on a vertically opposite side from their teeth is high as compared to that of the other reverse-face driving link plates so as to function as guide link plates for preventing the chain from falling out of sprocket teeth.

7. A manufacturing method of a silent chain constructed by linking a large number of link plates having a pair of teeth and pin holes by idly fitting pins into said pin holes, disposing outer link plates on outermost sides of said link plates in a link rank in which a number of said link plates in a chain width direction is lessened by one while being fixed with said pin and by assembling inner link ranks having no outer link plate with said outer link ranks having said outer link plates alternately in a longitudinal direction of the chain;
said method comprising steps of:
preparing a plurality of types of large number of link plates whose hole pitch between said pair of pin holes is different and assembling the link plates of said inner link rank so that the hole pitch of said outermost link plates in the chain width direction is shorter than those of the center link plates; and
applying pre-stress of tensile stress greater than yield stress of said link plate to said chain after assembling said chain to plastically deform the hole pitch of said link plates in said inner link rank so that the hole pitches are equalized as compared to those before said pre-stress is applied.

8. The manufacturing method of the silent chain as set forth in Claim 7, wherein the link plates in said outer link rank are assembled so that the hole pitches of said center link plates in the chain width direction become shorter than those located on the outside thereof.

9. The manufacturing method of the silent chain as set forth in Claim 7, wherein said large number of link plates in said outer link rank is assembled by those having substantially the same hole pitch.

10. The manufacturing method of the silent chain as set forth in anyone of Claims 7 through 9, wherein said outer link plate is a guide link plate for preventing the chain from falling out of sprocket teeth and is assembled with said pin so as not to be rotatable; and
said silent chain has teeth only in one direction above or below a pitch line.

11. The manufacturing method of the silent chain as set forth in anyone of Claims 7 through 9, wherein said link plates include front-face driving link plates whose teeth face up or down in one direction and reverse-face driving link plates whose teeth face in the direction opposite from said teeth; and
said silent chain is a duplex driving silent chain having said teeth in both planes of above and below a pitch line.

12. The manufacturing method of the silent chain as set forth in Claim 11, wherein a plurality of ranks of said reverse-face driving link plates are disposed on both sides of a plurality of ranks of said front-face driving link plates;
said outer link plate has a pair of teeth facing to the same direction with said reverse-face driving link plates and is fixed with said pin so as not to be rotatable; and
said reverse-face driving link plates adjacent to said front-face driving link plates are arranged so that height of a back on the opposite side from the teeth is high as compared to the other reverse-face driving link plates to commonly use as a guide link plate for preventing the chain from falling out of the sprocket teeth.
